# EUROPEAN PATENT APPLICATION

(11) **EP 4 186 375 A1**
(43) Date of publication of application: **31.05.2023**
(21) Application number: 21211137.1
(22) Date of filing: 29.11.2021
(51) Int. Cl.: A23L 2/52, A23L 29/10, A23L 29/20, A23L 29/231, A23L 29/256, A23L 29/269, A23L 29/30, A23L 33/115, A23L 33/21, A23P 30/40

(54) **COMPOSITION AND FOAM**

(71) Applicant: ADM WILD Europe GmbH & Co. KG, 69214 Eppelheim (DE)
(72) Inventor: Chatard, Dominique, 69214 Eppelheim (DE); Wanger, Janina, 69214 Eppelheim (DE)
(74) Representative: Grünecker Patent- und Rechtsanwälte PartG mbB

(57) **Abstract**

The present invention relates to a composition or foam, comprising soluble dietary fiber, hydrocolloid, emulsifier and oil and/or fat, a food-product additive and a food product comprising the composition or the foam, a foam obtainable from the composition, methods for producing the composition, foam, food-product additive and food product, the use of the composition, foam, or food-product additive in a food product and a container comprising the composition, foam or food-product additive.

## Description

### Field of the invention

The present invention relates to a composition or foam, comprising soluble dietary fiber, hydrocolloid, emulsifier and oil and/or fat, a food-product additive and a food product comprising the composition or the foam, a foam obtainable from the composition, methods for producing the composition, foam, food-product additive and food product, the use of the composition, foam, or food-product additive in a food product and a container comprising the composition, foam or food-product additive.

### Background of the invention

Stabilized gas bubbles in a food matrix build foam, which is often considered as a highly desirable attribute. Such foamed food products provide a unique texture and are commonly used in toppings, icings, mousses, fillings or gravies for desserts, meals or beverages. The benefits of foamed food products relate to softer and smoother texture, enhanced flavour delivery and altered rheology. Therefore, the ability to entrap gas bubbles in a food matrix and the stability of the foam are important in order to provide a pleasing product for the consumer. Common foamed food products are generally formed by bubbling, whipping, shaking or other gas incorporation methods, such as gas injection.

A foam is a substance made by trapping air or gas bubbles, as a disperse phase, inside a solid or liquid matrix forming the continuous phase. The continuous phase may be foamed by incorporating a gas therein, the gas being any suitable gas e.g. air, CO₂, etc. The gas may be incorporated by any suitable manner including simple mixing in contact with an atmosphere containing the gas or even ambient conditions, aeration, homogenization or other methods of injecting a gas into or through the aqueous phase and by use of gas expansion devices. Furthermore, a gas phase can be induced in-situ either by biochemical reaction or by changing in the overall equilibrium conditions in the system impacting the gas solubility either by chemical or physical means.

The bubbles of gas in the foam are separated by a thin, continuous film of liquid having a natural tendency to thin down and eventually to break, under the combined influence of the gravitational force on the water in the film and the van der Waals attraction between the air bubbles on either side of the film.

Typically, the volume of gas is much larger than that of the liquid or solid, with thin films separating gas pockets. The formation of a large area of interface between the two phases normally requires the expenditure of a significant amount of energy, but this can be reduced by a means of emulsifiers/surfactants.

Some systems are so readily dispersible they are referred to as spontaneously emulsifiable, Sometimes, though, the energy required to form the new surface is provided by chemical or physical reactions within the system itself.

However, further additives are required to stabilize the foam. Surface active agents have commonly been used to stabilize foamed food products. In particular, the products are mainly based on proteins from animal origin and/or fat to provide a whippable emulsion stabilized with various thickeners and emulsifiers for achieving a stable foamy structure with large overrun. Consequently, those products have a long list of ingredients including chemical additives, which are of increased concerns by health-conscious consumers.

Nowadays public interest is focused on nutritional aspects of processed foods such as energy density, fat-free and without cholesterol, as well as absence of potential allergens. The consumer's demand for healthy nutritional foods that retain the quality of the corresponding traditional formulation has led to the development of a large number of potential fat replacers based on proteins, polyesters, texturizing agents and a variety of other approaches which in turn are losing acceptance by consumers in today's market who are also looking for fewer additives in products, in an attempt to live healthier lifestyles.

EP-A-1 738 650 relates to aerated food compositions comprising protein, oil, and cyclodextrin. The compositions is suitable for incorporating liquid oils into aerated food products.

FR-A-2 710 501 discloses a fruit-flavoured cream comprising fruit puree, water, sugar, pectin, texturizers and emulsifiers.

FR-A-2 985 885 relates to foamed food compositions containing food puree. The foamed food compositions contain a stabilizing mixture comprising a modified starch, at least one sucrose ester and xanthan gum.

EP-A-0 274 348 discloses a process for preparing a dietary foam product, which contains fat, proteins and a thickening agent.

WO-A-2011/044557 discloses whippable food products containing fat, insoluble fiber, protein, emulsifier, sweetener and stabilizer.

US 5,789,004 discloses a stabilizer composition for whipped toppings containing microcrystalline cellulose coprocessed with guar and microcrystalline cellulose coprocessed with carboxymethylcellulose.

US 5,000,974 relates to low-calorie aerated foods comprising an aeratable fruit base, a hydrocolloid combination of locust-bean flour (gum), pectin, preferably having a degree of esterification between 35 to 38%, carrageenans and emulsifier.

CN 108 378 296 A discloses a powder comprising various components selected from natural fibers and fruit or vegetable powder. CN 109 123 414 A discloses a similar powder composition comprising specifically oat fiber and yeast powder.

US 2010/173046 A1 discloses a food product containing a farinaceous ingredient, a sweetening ingredient, a protein ingredient, a fiber ingredient and a fat ingredient.

WO-A-2011/106182 relates to an emulsified mixture containing a bulking agent, a surfactant, a gelling agent, a protein component, a fatty acids component and an emulsifier.

WO-A-2016/049577 describes a whippable food product comprising dietary fiber, protein, food starch, emulsifier, hydrocolloid and water.

EP-A-1 782 699 relates to a cereal product having a high moisture content and comprising protein, fiber, carbohydrates and fat.

All of the aerated food product known today contain additives, which do not meet the consumer's desire of food products originating from plants. In addition, in view of a healthy diet, consumers are increasingly looking for delicious alternatives without allergen, which are a source of fiber and contain fewer additives.

### Summary of the invention

The object of the present invention is therefore to provide a composition, which can provide a source for fiber and form a stable foam having desirable organoleptic characteristics.

Said object is solved by a composition or a foam comprising soluble dietary fiber, hydrocolloid, emulsifier and oil and/or fat, wherein the soluble fiber has a weight average molecular weight between 500 and 3,000 Daltons, the content of soluble fiber is between 0.1 and 2.5% by weight, based on the total weight of the composition or foam, the weight ratio between soluble fiber and hydrocolloid is between 1 : 1 and 20 : 1, the emulsifier content is between 0.05 to 0.8% by weight, based on total weight of the composition or foam, and the oil and/or fat content is higher than 0.85% by weight, based on total weight of the composition or foam.

Surprisingly, the composition in accordance with the present invention forms a stable foam and has favorable organoleptic characteristics.

Said object is further solved by a food-product additive comprising the composition, a foam obtainable from the composition or food-product additive, a method of producing the composition, a method for producing or enhancing foam in a food product, a food product comprising the composition, a method for producing the food product, the use of said foamable composition for addition to a food product and a container comprising said composition, foam or food product additive.

Preferred embodiments are described in the dependent claims 2 to 5, 7, 8, 14, and 15.

### Embodiments of the invention

The present invention provides in embodiments:
1. Composition or foam comprising soluble dietary fiber, hydrocolloid, emulsifier and oil and/or fat, wherein
   i. the soluble fiber has a weight average molecular weight between 500 and 3,000 Daltons,
   ii. the content of soluble fiber is between 0.1 and 2.5% by weight, based on the total weight of the composition or foam,
   iii. the weight ratio between soluble fiber and hydrocolloid is from 1 : 1 to 20 : 1,
   iv. the emulsifier content is between 0.05 to 0.8% by weight, based on total weight of the composition or foam, and
   v. the oil and/or fat content is higher than 0.85 % by weight, based on total weight of the composition or foam.
2. The composition or foam according to embodiment 1, wherein the hydrocolloid is xanthan, alginic acid, salts of alginic acid, propylene glycol alginate, carrageenan, or high methoxyl pectin, or any combination thereof.
3. The composition or foam according to any one of the preceding embodiments, wherein the emulsifier is lecithin.
4. The composition or foam according to any one of the preceding embodiments, wherein the composition or foam comprises between 0.1 and 15% by weight protein, based on the total weight of the composition or foam.
5. The composition or foam according to embodiment 4, wherein the protein is milk protein or protein from a plant source, or any combination thereof.
6. The composition or foam according to any one of the preceding embodiments, wherein the composition or foam comprises between 0.9 and 9% by weight of oil and/or fat, based on the total weight of the composition or foam.
7. The composition or foam according to embodiment 6, wherein the oil is palm kernel oil, canola oil, soy bean oil, sunflower oil, safflower oil, cotton seed oil, palm oil, corn oil, coconut oil or microalgae oil, or any combination of these oils.
8. The composition or foam according to any one of the preceding embodiments, wherein the composition or foam comprises less than 12% by weight of added natural sweetener, based on the total weight of the composition or foam.
9. The composition or foam according to any one of the preceding embodiments, wherein the composition or foam comprises diluents, preferably wherein the diluent is water, club soda, seltzer, mineral water, milk, or plant-based juice/broth, vegan milk from soy, oat, rice, flax, pea, coconut, almond, cashew, hazelnut, macadamia, or peanut, or any combination thereof.
10. Food-product additive comprising the composition or foam according to any one of the preceding embodiments.
11. The food-product additive according to embodiment 10, wherein the pH of the food product is raised by adding at least one component able to raise the pH in compliance with European and FDA food regulation.
12. The food-product additive according to embodiment 11 wherein the component is one or more phosphate salt, one or more citrate salt, one or more hydroxide, one or more carbonate salt, one or more lactate salt, one or more chlorate salt, or any combination thereof.
13. The food-product additive according to any one of embodiments 10 to 12, wherein the food product is a beverage.
14. The food-product additive according to embodiment 13, wherein the beverage is milk, coffee, chocolate, tea, a sparkling alcoholic beverage (such as beer, cider, fruit wine), a non-alcoholic beverage (such as lemonade, fruit juice nectar), water, club soda, seltzer, mineral water, milk, or plant-based juice/broth, vegan milk from soy, oat, rice, flax, pea, coconut, almond, cashew, hazelnut, macadamia, or peanut, or any combination thereof.
15. The food-product additive according to any one of embodiments 13 or 14, wherein the beverage comprises a fruit extract, or any combination of fruit extracts.
16. The food-product additive according to embodiment 13 to 15, wherein the beverage comprises less than 2% by weight of flavoring component, based on total weight of the beverage.
17. The composition or food-product additive according to any one of embodiments 1 to 16, wherein the composition or food-product additive is a soluble or dispersible cold-water foam booster.
18. The composition or food-product additive according to any one of embodiments 1 to 17, wherein the composition or food-product additive is a foamable composition or foamable food-product additive.
19. The composition or food-product additive according to any one of embodiments 1 to 18, wherein the composition or food-product additive is a powder, a liquid, or in a solid state.
20. The composition, foam or food-product additive according to any one of embodiments 1 to 19, wherein the composition, foam or food-product additive is a vegan composition, foam or food-product additive.
21. Foam obtainable or obtained from the composition or food-product additive according to any one of embodiments 1 to 20.
22. Method for producing a composition, foam or food-product additive according to any one of embodiments 1 to 20 comprising the steps of weighing the ingredients in moisture resistant packaging, or blending the ingredients before packing.
23. Method according to embodiment 22, wherein the composition or food-product additive is a foamable composition or food-product additive.
24. Method for producing or enhancing foam in a food product comprising the steps of adding the composition, foam or food-product additive of any one of embodiments 1 to 20 to the food product and pouring the food-product in a receptacle having a mechanical rotating or vibrating device, preferably a mixer, whipper or agitator actuated by a motor or magnetic impulsion.
25. Food product comprising the composition, foam or food-product additive of any one of embodiments 1 to 20.
26. Food product according to embodiment 25, wherein the food product is a beverage.
27. Food product according to embodiment 26, wherein the beverage is milk, coffee, chocolate, tea, a sparkling alcoholic beverage (such as beer, cider, fruit wine), a non-alcoholic beverage (such as lemonade, fruit juice nectar), water, club soda, seltzer, mineral water, milk, or plant-based juice/broth, vegan milk from soy, oat, rice, flax, pea, coconut, almond, cashew, hazelnut, macadamia, or peanut, or any combination thereof.
28. Food product according to embodiment 27, wherein the beverage comprises at least one plant extract.
29. Method for the production of the food product of embodiments 25 to 28 comprising the steps of:
   (i) Dispersing soluble dietary fiber and hydrocolloid in water or in the water-based bulk of the food-product by means of an effective mixing device,
   (ii) Optionally preheating the resulting dispersion of step (i) to solubilize and hydrate the dried powders,
   (iii) Dispersing emulsifier in the oil and/or fat of the food-product,
   (iv) Mixing the dispersions of steps (ii) and (iii) to obtain a food-product mix,
   (v) Optionally preheating the obtained food-product mix of step (iv),
   (vi) Thermally sterilizing the food-product by direct or indirect heat exchanger process, applying a pressure range of 2,000 kPa to 25,000 kPa, in order to achieve sterility,
   (vii) Filling the chilled food-product under hygienic conditions,
   (viii) Optionally filling the chilled product aseptically in a packaging.
30. Method for the production of the food product of embodiments 25 to 28 comprising the steps of:
   (i) Dispersing soluble dietary fiber, hydrocolloid, emulsifier, water and oil and/or fat to obtain a food-product mix,
   (ii) Optionally preheating the obtained food-product mix,
   (iii) Thermally sterilizing the food-product by direct or indirect heat exchanger process, applying a pressure range of 2,000 kPa to 25,000 kPa, in order to achieve sterility,
   (iv) Filling the chilled food-product under hygienic conditions,
   (v) Optionally filling the chilled product aseptically in a packaging.
31. Use of the composition, foam or food-product additive according to any one of embodiments 1 to 20 for addition to a food product.
32. Container comprising the composition, foam or food-product additive according to any one of embodiments 1 to 20.
33. Container according to embodiment 32, wherein the container is a pressurized container comprising a pressurized gas at a pressure of from 10 to 30 x 10⁵ Pa.
34. Container according to embodiment 33, wherein the pressurized gas is selected among air, nitrogen, carbon dioxide, nitrous oxide, helium, oxygen and mixtures thereof.
35. Container according to embodiment 33 or 34, wherein the container comprises a valve allowing to introduce the pressurized gas and an opening for dispensing the foamed composition.

### Detailed description

The composition or foam of the present invention comprises at least one soluble dietary fiber having a weight average molecular weight between 500 to 3,000 Dalton.

Fibers are non-digestible polysaccharides and non-digestible oligosaccharides, and are considered to be dietary fibers by their physiological or physical-chemical properties. Dietary fibers are non-digestible by present definition in that they are resistant to digestion and absorption in the human small intestine. Soluble fibers can be produced from plant based carbohydrates by a bio-enzymatic process providing consistent product characteristics regarding the degree of polymerization with a well-controlled level of oligomers and purity.

They are highly soluble and with low caloric value. The nutritional value and sweet taste impact depends on the respective process used by the manufacturers.

Fructo-oligosaccharides (FOS) are soluble dietary fibers belonging to the family of fructans (e. g. Actilight^{®}). They are slightly sweet and are used in a wide range of foodstuffs for nutrition (sugars replacement, fibre enrichment) and health purposes.

Actilight^{®} is used as an ingredient to reduce sugars, enrich in fibers and improve gastrointestinal health, due to its prebiotic effect.

Fibersol, Fibersol^{®}-2, digestion resistant maltodextrin, is a spray-dried powder produced by a proprietary method of controlled enzymatic hydrolysis of cornstarch. It has numerous starch linkages that remain undigested by enzymes of the human digestive tract. It has been recognized as GRAS (generally recognized as safe) by the Food and Drug Administration and certified Kosher and Pareve by the Orthodox.

The dietary fiber in accordance with the present invention is an edible indigestible soluble carbohydrate polymer or a mixture thereof. The dietary fiber is selected from a plant source or produced by microorganisms such as resistant starch (RS), or a non-starch polysaccharide (NSP) with high molar weight or a low molar weight non-starch polysaccharide (prebiotics). In a preferred embodiment in combination with any of the above or below embodiments, the natural fiber is a non-starch polysaccharide, which is selected from a citrus fiber, a apple fiber, a pea fiber, a potato fiber, a wheat fiber, pectin, a beta-Glucan (obtained from barley, oat, rye, from yeast/moulds fermentation), fiber processed from psyllium seed husks and a mixture thereof. In a further preferred embodiment in combination with any of the above or below embodiments, the natural fiber is a non-starch polysaccharide, which is selected from resistant oligosaccharide (FOS/GOS), inulin (obtained from chicory, wheat), resistant maltodextrins/dextrin (Fibersol^{®}) and polydexrose and a mixture thereof.

In another preferred embodiment in combination with any of the above or below embodiments, the composition may further contain an insoluble fiber (also designated high MW insoluble fiber herein) in addition to the soluble dietary fiber. Examples thereof are known to the skilled person and include fibers derived from wheat bran, cellulose, lignin, starches etc.

In a preferred embodiment in combination with any of the above or below embodiments, the soluble dietary fiber is present in an amount of 0.1 to 2.4% by weight, more preferably 0.2 to 2.2% by weight, most preferably 0.3 to 2.0% by weight, particularly preferably 0.5 to 1.8% by weight, in particular 1.2 to 1.5% by weight based on the total weight of the composition. In a further preferred embodiment, an insoluble fiber may be additionally present, wherein the insoluble fiber is present in an amount 0.1 to 5% by weight, based on the total weight of the composition, more preferably the insoluble fiber is present in an amount of 0.5 to 2% by weight, based on the total weight of the composition.

In a preferred embodiment in combination with any of the above or below embodiments, the weight average molecular weight of the soluble dietary fiber is from 500 to 2,500 Dalton, more preferably 1,000 to 2,000, in particular 1,200 to 1,800 Dalton.

The composition or foam of the present invention comprises at least one hydrocolloid. Hydrocolloids are colloidal substances with an affinity for water. From a chemical point of view, they are macromolecular hydrophilic substances. Some of them are water soluble and form colloidal solutions, others are only able to swell in water and can be dispersed by means of shear forces. Hydrocolloids produce viscous solutions, pseudo-gels, or gels in water. The heterogeneous group consists of polysaccharides and proteins.

In accordance to their origin and way of manufacturing, hydrocolloids can be classified in four different groups:
1) hydrocolloids purely isolated from plants (without chemical modification);
2) hydrocolloids obtained by fermentation;
3) plant-derived hydrocolloids that are chemically modified;
4) hydrocolloids from animals.

According to their botanical origin and their function in the plant organism, naturally occurring vegetable hydrocolloids can be divided into:
- exudates (protective colloids being deposited on wounds): acacia gum/gum Arabic, tragacanth, karaya gum, ghatti gum;
- seed flours (reserve polysaccharides): guar gum, locust bean gum, tara gum, tamarind seed gum;
- extracts from land plants and marine algae (scaffolding substances): pectins, agar, alginate, carrageenan, starches, cellulose, furcelleran, larch gum.

Additionally, there are:
- microbial or bacterial polysaccharides: xanthan, dextran, curdlan, scleroglucan, gellan, pullulan;
- modified polysaccharides: propylene glycol alginate, amidated pectin, modified starches, cellulose derivatives;
- proteins of animal origin: gelatine, caseinates.

In a preferred embodiment in combination with any of the above or below embodiments, the hydrocolloid present in the composition or foam is a polysaccharide, more preferably xanthan, alginic acid, salts of alginic acid, such as sodium, potassium, ammonium and calcium salts, propylene glycol alginate, carrageenan, pectin, gellan gum, dextran, pullulan, or any combination thereof. In particular, the pectin is a high methoxyl (HM-) pectin. HM-pectins have a degree of esterification above 50%. Particularly preferably, the hydrocolloid is xanthan or alginate.

In a further preferred embodiment in combination with any of the above or below embodiments the hydrocolloid is present in an amount of 0.01 to 1% by weight, based on the total weight of the composition or foam, more preferably 0.05 to 0.8% by weight, most preferably 0.05 to 0.5% by weight, particularly preferably 0.1 to 0.6% by weight, in particular 0.1 to 0.3% by weight, based on the total weight of the composition or foam.

The composition or foam of the present invention further comprises an emulsifier. Emulsifiers (also termed "surfactants") are surface-active agents that function to reduce the surface tension between two immiscible phases at their interface, allowing them to become miscible. The interface can be between two liquids, a liquid and a gas, or a liquid and a solid. By use of the proper emulsifier, the two phases will mix and separation is prevented or delayed. The emulsifier tends to concentrate at the interface between two immiscible phases in such fashion, that the surface properties are altered by the orientation of the emulsifiers at the interface which reduces the resistance of the two substances to combine.

Emulsifiers/surfactants can reduce the surface tension of a foaming composition and thereby facilitate the formation of a foam upon aeration. They are frequently used as blends for obtaining the most stable emulsion system. Emulsifiers have the following major functions:
- Complexing - Reaction with starch in bakery products which retards the crystallization of the starch, thus retarding the firming of the crumb which is associated with staling;
- Dispersing - The reduction of interfacial tension which creates an intimate mixture of two liquids that normally are immiscible, an example being oil-in-water emulsions such as salad dressing;
- Crystallization control - Control of crystallization in sugar and fat systems, e.g. chocolate, where it allows for brighter initial gloss and prevention of solidified fat on the surface;
- Wetting - Allows the surface to be more attracted to water, such as powders, e.g. coffee whitener, in which the addition of surfactant aids the dispersion of the powder in the liquid without lumping on the surface;
- Lubricating - Functions as lubricant, such as in caramels, by reducing their tendency to stick to cutting knives, wrappers, and teeth.

Emulsifiers are also classified according to their hydrophilic/lipophilic balance (HLB), being hydrophilic (water-loving) or lipophilic (oil-loving). The HLB, is a measure of the emulsifier's affinity to oil or water. The HLB range is 0-20, where 0 indicates completely lipophilic and 20 indicates completely hydrophilic. The HLB scale ranges from 1 (totally lipophilic) to 20 (totally hydrophilic), with 10 representing an equal balance of both characteristics. Lipophilic emulsifiers form water-in-oil (w/o) emulsions; hydrophilic surfactants form oil-in-water (o/w) emulsions. The HLB of a blend of two emulsifiers equals the weight fraction of emulsifier A times its HLB value plus the weight fraction of emulsifier B times its HLB value (weighted average).

The emulsifier consists of a hydrocarbon chain which has affinity for fats and oils (lipophilic group) and a polar group which is attracted to water or aqueous solutions (hydrophilic group). The emulsifier tends to concentrate at the interface between two immiscible liquids, with the hydrophilic portion in the water and the lipophilic portion in the oil.

Most emulsions involve water and oil and/or fat as the two immiscible phases, one being dispersed as finite globules in the other. The liquid as globules is referred to as the dispersed or internal phase, while the medium in which they are suspended is the continuous or external phase.

There are two types of emulsions with water and oil, depending on the composition of the phases. In an oil-in-water emulsion such as milk and mayonnaise, the water is the external phase and the oil is the internal phase. In a water-in-oil emulsion such as butter, the oil is the external phase and the water is the internal phase.

In a preferred embodiment in combination with any of the above or below embodiments, the emulsifier is lecithin, more preferably the emulsifier is lecithin.

In a further preferred embodiment in combination with any of the above or below embodiments, the emulsifier is present in an amount of 0.05 to 0.7 % by weight, based on the total weight of the composition or foam, more preferably 0.1 to 0.6 % by weight, most preferably 0.15 to 0.55% by weight, particularly preferably 0.2 to 0.5% by weight, in particular 0.2 to 0.3% by weight, based on the total weight of the composition or foam.

In a preferred embodiment in combination with any of the above or below embodiments, the weight ratio between the soluble dietary fiber and the hydrocolloid is from 2 : 1 to 20 : 1, more preferably from 3 : 1 to 16 : 1.

In another preferred embodiment in combination with any of the above or below embodiments, the composition or foam comprises between 0.1 and 15% by weight protein, based on the total weight of the composition or foam, more preferably 0.3 to 10% by weight, most preferably 0.5 to 8% by weight, particularly preferably 0.8 to 6% by weight, in particular 1 to 5% by weight, based on the total weight of the composition or foam.

In a preferred embodiment in combination with any of the above or below embodiments, the protein is a milk protein or protein from a plant source, or any combination thereof.

In a further preferred embodiment in combination with any of the above or below embodiments, the composition or foam comprises between 0.9 and 9% by weight of oil and/or fat, based on the total weight of the composition or foam, more preferably 0.95 to 6% by weight, most preferably 1 to 5% by weight, particularly preferably 1.5 to 4% by weight, in particular 2 to 3.6% by weight, based on the total weight of the composition or foam.

In a preferred embodiment in combination with any of the above or below embodiments, the oil and/or fat is plant-based.

In another preferred embodiment in combination with any of the above or below embodiments, the oil is palm kernel oil, canola oil, soy bean oil, sunflower oil, safflower oil, cotton seed oil, palm oil, corn oil, coconut oil or microalgae oil, or any combination of these oils. More preferably the oil is soy bean oil, sunflower oil, corn oil, or coconut oil, particularly preferably the oil is sunflower oil.

In a preferred embodiment in combination with any of the above or below embodiments, the composition or foam comprises less than 12% by weight of added sweetener, based on the total weight of the composition or foam. More preferably, the composition or foam comprises less than 10% by weight, most preferably 8% by weight or less, particularly preferably 5% or less, in particular 2% or less, based on the total weight of the composition or foam.

In a preferred embodiment in accordance with any of the above or below embodiments, the sweetener is selected from the group consisting of a natural carbohydrate, a natural sugar substitute, an artificial sugar or a mixture thereof. Particularly preferably the sweetener is a natural carbohydrate.

Suitable natural carbohydrates include refined mono- and disaccharides such as allulose, fructose, glucose, lactose, maltose, saccharose, tagatose, hydrolyzed saccharose concentrate, invert sugar syrup, glucose syrup, maltodextrin or corn syrup solids. Suitable natural sugar substitutes, as used herein, include natural syrup containing carbohydrates such as honey, syrup from processed fruit juice or fruit juice concentrate (e.g. Fruit-up^{®}, apple juice concentrate, grape juice concentrate) and syrup from vegetable such as cane sugar, beet sugar, cane juice, beet juice, or agave nectar, tree syrup such as maple syrup, golden syrup, caramel sugar syrup, sugar alcohols such as arabitol, erythritol, glycerol, isomalt, lactitol, maltitol, mannitol, sorbitol or xylitol. Suitable artificial sweeteners include acesulfame potassium, aspartame, cyclamate, mogroside, saccharine, stevia extract, stevioside, rebaudiosides and sucralose.

In a further preferred embodiment in combination with any of the above or below embodiments, the composition or foam further comprises at least one diluent. Preferably the diluent is selected from water, club soda, seltzer, mineral water, milk, or plant-based juice/broth, vegan milk from soy, oat, rice, flax, pea, coconut, almond, cashew, hazelnut, macadamia, or peanut, or any combination thereof.

In a preferred embodiment in accordance with any of the above or below embodiments, the composition or foam further comprises at least one additional ingredient selected from a colorant including liquids, powders, gels, solids, or pastes (including e. g. caramel syrup, black carrot, paprika, turmeric, saffron, spirulina, grape color extract), a flavouring agent including liquids, powders, gels, solids, or pastes including taste modifier, a pH regulator, an acidifying agent, a preservative, a mineral, including salt, an antioxidant, a substance or solution with a positive nutritional-physiological or health effect, and a natural organic acid.

According to the invention, the term "a substance or solution with a positive nutritional-physiological or health effect" is understood to mean a substance or a solution that has one or more substances with positive nutritional-physiological or health effects. Components with a positive nutritional-physiological or health effect are, e.g., vitamins, minerals, dietary fibres, grape seed extract, fruit extract, olive extract, secondary phytonutrients, such as, e.g., polyphenols, Omega-3 fatty acids, phytosterols, tocopherols, isoflavones, carotenoids, blood sugar-regulating molecules, sugar alcohols, starter cultures with probiotic effect such as lactic acid and bifido bacteria e.g., Lactobacillus acidophilus, Lactobacillus sakei, Lactobacillus casei, Lactobacillus rhamnosus, Bifidobacterium longum, Bifidobacterium lactis, Bifidobacterium rhamnosus, Bifidobacterium breve, or mixtures of these.

The composition or foam in accordance with the present invention may further comprise a thickening agent. Thickening agents, or thickeners, is the term applied to substances which increase the viscosity of a solution or liquid/solid mixture without substantially modifying its other properties. Thickeners may also improve the suspension of other ingredients or emulsions which increases the stability of the product. Thickening agents are often regulated as food additives and as cosmetics and personal hygiene product ingredients. Some thickening agents are gelling agents, forming a gel or pseudo-gel, dissolving in the liquid phase as a colloid mixture that forms a weakly cohesive internal structure.

Basically a thickener can be a natural thickener, a synthetic thickener and an inorganic thickener. Food thickeners frequently are based on either polysaccharides (starches, vegetable gums, and pectin), or proteins.

From a chemical point of view, thickeners are macromolecular hydrophilic substances. Some of them are water soluble and form colloidal solutions others are only able to swell in water and can be dispersed by means of shear forces. Hydrocolloids produce viscous solutions, pseudo-gels, or gels in water. The heterogeneous group consists of polysaccharides and proteins.

Examplary thickener include, for example, naturally-occurring polymeric materials, such as locust bean gum, sodium alginate, sodium caseinate, egg albumin, gelatin agar, carrageenin gum, sodium alginate, xanthan gum, quince seed extract, tragacanth gum, guar gum, starch, chemically modified starches, semi-synthetic polymeric materials such as cellulose ethers (e.g. hydroxyethyl cellulose, methyl cellulose, carboxymethyl cellulose, hydroxy propylmethyl cellulose), guar gum, hydroxypropyl guar gum, soluble starch, cationic celluloses, cationic guars, and synthetic polymeric materials, such as carboxyvinyl polymers, polyvinylpyrrolidone, polyvinyl alcohol, polyacrylic acid polymers, polymethacrylic acid polymers, polyvinyl acetate polymers, polyvinyl chloride polymers, and polyvinylidene chloride polymers.

In a particular preferred embodiment in combination with any of the embodiments described above or below, the composition of the present invention comprises 0.5 to 10% by weight of the additional ingredient, particularly preferably the composition comprises 1 to 5% by weight, based on the total weight of the composition.

In a preferred embodiment in combination with any of the embodiments described above or below, the composition or foam of the present invention comprises 0.1 to 15% by weight of a plant protein extract, 12% or less by weight of a sweetener, 0.01 to 1% by weight of a hydrocolloid, and 0.9 to 9% by weight of a fat and/or oil, based on the total weight of the composition.

In a more preferred embodiment in combination with any of the embodiments described above or below, the composition or foam of the present invention comprises 1 to 5% by weight of a plant protein extract, 5% or less by weight of a sweetener, 0.1 to 0.6% by weight of a hydrocolloid, and 2 to 4% by weight of a fat and/or oil, based on the total weight of the composition.

In a particular preferred embodiment in combination with any of the embodiments described above or below, the composition or foam of the present invention comprises 1.5 to 3.5% by weight of a plant protein extract, 3% or less by weight of a sweetener, 0.1 to 0.3% by weight of a hydrocolloid, and 1.5 to 4% by weight of a fat and/or oil, based on the total weight of the composition.

The present invention further provides a food-product additive comprising the composition or the foam of the present invention.

In a preferred embodiment in combination with any of the above or below embodiments, the pH of the food product is raised by adding at least one component able to raise the pH. Preferably, the component to raise the pH is in compliance with European and FDA food regulation. More preferably, the component to raise the pH is one or more phosphate salt, one or more citrate salt, one or more hydroxide, one or more carbonate salt, one or more lactate salt, one or more chlorate salt, or any combination thereof.

In another preferred embodiment in combination with any of the above or below embodiments, the food product is a beverage, more preferably the beverage is milk, coffee, chocolate, tea, a sparkling alcoholic beverage (such as beer, cider, fruit wine), a non-alcoholic beverage (such as lemonade, fruit juice nectar), water, club soda, seltzer, mineral water, milk, or plant-based juice/broth, vegan milk from soy, oat, rice, flax, pea, coconut, almond, cashew, hazelnut, macadamia, or peanut, or any combination thereof.

According to the present invention, a beverage is meant to encompass carbonated and noncarbonated beverages, water and flavored water, juice from fruit and vegetable, sport drinks, energy drinks; teas, coffee, cocoa, beverages containing milk; fruit milk beverages, drinkable yogurt, lactic acid bacteria beverages, alcoholic drinks (beverage containing alcohol) such as beer, bilibili, boza, cider, ginger ale, kvass, poire, wine, fruit wine, sparkling wine e.g. champagne, fortified wine (e.g. Port, Madeira, Marsala, Sherry, Vermouth, Vinsanto), mead, Sake, distilled alcoholic drinks as absinthe, akvavit, arack, ouzo, pastis, raki, sambuca, brandy (e.g. armagnac, cognac, metaxa, singani), calvados, everclear, ginebra, grappa, jenever, rum, shochu, soju, spirit, tequila, vodka, whisky, whiskey and liqueurs (e.g. fruit liqueurs, coffee liqueur, cream liqueur, herbal liqueur, whisky liqueur, cacao liqueur) served cold, at ambient temperature or hot.

In the context of the present invention, the food product includes solid food products. Solid food products include milk products of smooth consistence such as all types of cheese, desserts, icecream and yogurts, and other products such as condiments, sauces, jellies, bakery products with or without filling, cereals or processed meat products.

In a further preferred embodiment in combination with any of the above or below embodiments, the beverage comprises a fruit extract or any combination of fruit extracts.

In a further preferred embodiment in combination with any of the above or below embodiments, the fruit is selected from berries, e.g. açai berry blackberry, blackcurrant, blueberry, boysenberry, cranberry, elderberry, grape, gooseberry, kiwi, raspberry, redcurrant or strawberry; citrus fruits, e.g. blood orange, bitter orange, citron, clementine, grapefruit, pink grapefruit, kumquat, lemon, lime, mandarin, or orange; drupes, e.g. acerola, apricot, cherry, coconut, coffee, date, lychee, mango, mirabelle, nectarine, olive, peach or plum; melons, e.g. canary melon, cantaloupe melon, honeydew melon or watermelon; pomes, e.g. apples, pears, quince or chokeberry; succulent fruits, e.g. dragon fruit or prickly pear fruit; tropical and tropical-like fruits, e.g. banana, cacao, cherimoya, cashew apple, fig, guava, jackfruit, papaya, passionfruit, persimmon, pineapple, pomegranate, purple mangosteen, star fruit, tamarind or vanilla; plants with edible fruit-like structures, e.g. rhubarb; and nuts and nut-like fruits and seeds, e.g. chestnut, hazelnut, almond, cashew, coconut, pecan nut, pistachio, walnut, pine nut, macadamia, tonka bean or peanut. Preferably, the fruit is selected from berries such as raspberry, strawberry, blackcurrant or blueberry, from drupes such as apricot, cherry, coconut, coffee, lychee, mango, mirabelle, nectarine, olive, peach or plum, from pomes such as apples, pears or quince, from tropical fruits such as passion fruit, pineapple, banana, cacao, passionfruit, pomegranate or vanilla, citrus fruits such as orange, bitter orange, citron, grapefruit, pink grapefruit, lemon, lime or mandarin, from plants with edible fruit-like structures such as rhubarb, nuts or nut-like fruits and from seeds such as chestnut, hazelnut, almond, coconut, pecan nut, pistachio or peanut.

In another preferred embodiment in combination with any of the above or below embodiments, the food-product additive comprises less than 2% by weight of flavoring component, based on total weight of the beverage.

In a further preferred embodiment in combination with any of the above or below embodiments, the composition or food-product additive is a soluble or dispersible cold-water foam booster.

According to the invention, the term "foam booster" refers to an additive used to increase/improve foam production and to stabilize lather. Foam booster further refers to a substance which enhances the quality and/or longevity of a foam.

In another preferred embodiment in combination with any of the above or below embodiments, the composition or food-product additive is a foamable composition or foamable food-product additive.

In a preferred embodiment in combination with any of the above or below embodiments, the composition or food-product additive is a powder, a liquid, or in a solid state.

In a preferred embodiment in combination with any of the above or below embodiments, the composition, foam or food-product additive is a vegan composition, foam or food-product additive.

The present invention further relates to a foam obtainable or obtained from the composition or food-product additive of the present invention.

The present invention also relates to a method for producing a composition, foam or food-product additive according to the present invention comprising the steps of weighing the ingredients in moisture resistant packaging, or blending the ingredients before packing.

The present invention further relates to a method for producing or enhancing foam in a food product comprising the steps of adding the composition, foam or food-product additive of the present invention to the food product and pouring the food-product in a receptacle having a mechanical rotating or vibrating device such as mixer, whipper or agitator actuated by a motor or magnetic impulsion.

Such a device may simultaneously indirectly heat-up the food-product up to 75 °C. The rotation speed or vibration frequency is controlled and optionally adjustable at a speed sufficient for aerating and frothing the food product.

Alternatively the food-product is mechanically sucked from the receptacle by an steam or hot air jet/stream feed having high velocity and mixed within it through a nozzle.

The present invention further relates to a food product comprising the composition, foam or food-product additive of the present invention.

In a preferred embodiment in combination with any of the above or below embodiments, the food product is a beverage, more preferably the beverage is milk, coffee, chocolate, tea, a sparkling alcoholic beverage (such as beer, cider, fruit wine), a non-alcoholic beverage (such as lemonade, fruit juice nectar), water, club soda, seltzer, mineral water, milk, or plant-based juice/broth, vegan milk from soy, oat, rice, flax, pea, coconut, almond, cashew, hazelnut, macadamia, or peanut, or any combination thereof.

In a further preferred embodiment in combination with any of the above or below embodiments, the beverage comprises at least one extract of an edible plant or part of an edible plant. More preferably, the extract of an edible plant or part of an edible plant is an extract of a plant selected from the group consisting of a vegetable, a fruit, a herb, a spice, a seed, tea, cocoa and coffee, more preferably a vegetable, a fruit, a herb, tea and coffee. The plant extract can be selected from a juice, a puree, a concentrate, an infusion, a powder and a fermantat/brew.

According to the present invention, the term "plant extract" is used representatively for all products that are obtained from an edible plant or part of an edible plant by squeezing or by means of an extraction with a solvent, such as with maceration or percolation. An extract obtained in this way can subsequently be further processed into a dry extract. To produce the dry extract, the solvent can be withdrawn from the liquid raw extract, the concentrated extract or the cleaned extract by, for example, spray drying, freeze drying or vacuum drying.

The plant extract used according to the present invention may also include a plant juice. The term "juice" is used representatively for the natural fluid, fluid content, or liquid part that can be obtained from a plant or one of its parts, by squeezing, pressing or comminuting.

The plant extract used according to the present invention may also include a plant concentrate. The term "concentrate" is used representatively for all products that are obtained from a plant by means of removal of water from the fresh plant or from the respective juice. A dry plant product, such as a powder, is also included in the term "concentrate".

In a further preferred embodiment in combination with any of the above or below embodiments, the extract is a fruit extract and the fruit is selected from berries, e.g. açai berry blackberry, blackcurrant, blueberry, boysenberry, cranberry, elderberry, grape, gooseberry, kiwi, raspberry, redcurrant or strawberry; citrus fruits, e.g. blood orange, bitter orange, citron, clementine, grapefruit, pink grapefruit, kumquat, lemon, lime, mandarin, or orange; drupes, e.g. acerola, apricot, cherry, coconut, coffee, date, lychee, mango, mirabelle, nectarine, olive, peach or plum; melons, e.g. canary melon, cantaloupe melon, honeydew melon or watermelon; pomes, e.g. apples, pears, quince or chokeberry; succulent fruits, e.g. dragon fruit or prickly pear fruit; tropical and tropical-like fruits, e.g. banana, cacao, cherimoya, cashew apple, fig, guava, jackfruit, papaya, passionfruit, persimmon, pineapple, pomegranate, purple mangosteen, star fruit, tamarind or vanilla; plants with edible fruit-like structures, e.g. rhubarb; and nuts and nut-like fruits and seeds, e.g. chestnut, hazelnut, almond, cashew, coconut, pecan nut, pistachio, walnut, pine nut, macadamia, tonka bean or peanut. Preferably, the fruit is selected from berries such as raspberry, strawberry, blackcurrant or blueberry, from drupes such as apricot, cherry, coconut, coffee, lychee, mango, mirabelle, nectarine, olive, peach or plum, from pomes such as apples, pears or quince, from tropical fruits such as passion fruit, pineapple, banana, cacao, passionfruit, pomegranate or vanilla, citrus fruits such as orange, bitter orange, citron, grapefruit, pink grapefruit, lemon, lime or mandarin, from plants with edible fruit-like structures such as rhubarb, nuts or nut-like fruits and from seeds such as chestnut, hazelnut, almond, coconut, pecan nut, pistachio or peanut.

In a preferred embodiment in combination with any of the above or below embodiments, the extract is an extract of edible parts from a vegetable e.g., bulbs, flowers, fungi, leaves, roots, seeds, stems or tubers such as, but not limited to amaranth, artichoke, asparagus, avocado, azuki bean, beet greens, beetroot, bell pepper/capsicums, broccoli, brussels sprouts, cabbages, carrots, cauliflower, celeriac, celery, chilli peppers, courgette, cucumber, eggplant, fennel, garlic, ginger, kohlrabi, leeks, lettuce, liquorice, melons, mushrooms, okra, onions, parsnips, peas, potatoes, puha, pumpkins, radishes, rhubarb, salad green, shallot, spinach, spring onions, sprouted beans and seeds, sweet corn, taro, tomatoes, topinambur, turnips, watercress, witloof/chicory, or yams. Preferably, the vegetable is selected from artichoke, asparagus, avocado, beet greens, beetroot, bell pepper/capsicums, broccoli, brussels sprouts, cabbages, carrots, cauliflower, celeriac, celery, chilli peppers, courgette, cucumber, eggplant, fennel, garlic, ginger, kohlrabi, leeks, melons, mushrooms, onions, parsnips, peas, potatoes, pumpkins, radishes, rhubarb, shallot, spinach, spring onions, sweet corn, tomatoes, turnips.

In another preferred embodiment in combination with any of the above or below embodiments, the herb is selected from the group consisting of basil, borage, celery, chervil, chives, coriander, curry, dill, Fenugreek, garlic, hibiscus, laurel, lavender, lemongrass, lovage, majoram, peppermint, spearmint, oregano, parsley, rosemary, sage, savory, tarragon and thyme. Preferred herbs are basil, borage, celery, chervil, chives, coriander, curry, dill, Fenugreek, garlic, hibiscus, kaffir lime, laurel, lavender, lemongrass, lovage, majoram, peppermint, spearmint, oregano, parsley, rosemary, sage, savory, tarragon and thyme or a mixture thereof e. g. herbes de provence.

According to the present invention, the term "herb" encompasses the green leafy part as well as the flower such as lavender flowers.

In another preferred embodiment in combination with any of the above or below embodiments, suitable spices are selected from the group consisting of aniseed, cardamom, celery, chillies, cinnamon, cassia, cloves, coriander, cumin, dill, fennel, fenugreek, galangal, garlic, ginger, grains of paradise, horseradish, juniper berries, mace/nutmeg, mustard, nigella, onion, paprika, pepper (green, black, white, red), pink pepper, sichuan pepper, pimento, poppy seed, saffron, sesame seed, star anise, sumac, tonka bean, turmeric, vanilla pod and wasabi. Preferably, the spice is selected from aniseed, cardamom, celery, chillies, cinnamon, cloves, coriander, cumin, dill, fennel, fenugreek, galangal, garlic, ginger, horseradish, juniper berries, mace/nutmeg, mustard, onion, paprika, pepper, pimento, saffron, star anise, sumac, turmeric, vanilla pod and wasabi.

According to the present invention, the term "spice" encompasses a seed, fruit, root, stem, bark, flower or parts thereof which are primarily used for flavoring, coloring or preserving food.

In a further preferred embodiment in combination with any of the above or below embodiments, the extract of an edible plant or part of an edible plant is a mixture of one or more of the above mentioned plant extract.

In a further preferred embodiment in combination with any of the above or below embodiments, the food product further comprises a food extract.

In another preferred embodiment in combination with any of the above or below embodiments, the food extract is a dairy product, primarily produced from mammals such as cattle, water buffaloes, goats, sheep, camel or a mixture thereof. Suitable dairy products are a milk product, a cream product, a butter product, a fermented dairy product, a custard product, a cheese product, and a whey product. Preferably, the dairy product is selected from a spreadable cheese product, a processed cheese product, a cheese powder, a cream concentrate, a sweetened milk concentrate, a condensed milk, a cream cheese, a yoghurt or butter.

In a further preferred embodiment in combination with any of the above or below embodiments, the food extract is a condiment or a sauce, such as aioli, ajvar, chatni, chutney, green sauce, guacamole, HP sauce, hummus, ketchup, marmite, pesto, tahini, tapenade, garam masala, tandoori masala, or Raz el-Hanout.

In a preferred embodiment in combination with any of the above or below embodiments, the food extract and the extract of an edible plant or parts thereof is present in the beverage in an amount of 0.1 to 60% by weight, based on the total weight of the beverage, more preferable in an amount of 1.0 to 50 wt%, and most preferably 10 to 40% by weight, based on the total weight of the beverage.

The present invention also relates to a method for the production of the food product in accordance with the present invention.

In one option, the method comprises the steps of:
(i) Dispersing soluble dietary fiber and hydrocolloid in water or in the water-based bulk of the food-product by means of an effective mixing device,
(ii) Optionally preheating the resulting dispersion of step (i) to solubilize and hydrate the dried powders,
(iii) Dispersing emulsifier in the oil and/or fat of the food-product,
(iv) Mixing the dispersions of steps (ii) and (iii) to obtain a food-product mix,
(v) Optionally preheating the obtained food-product mix of step (iv),
(vi) Thermally sterilizing the food-product by direct or indirect heat exchanger process, applying a pressure range of 2,000 kPa to 25,000 kPa, in order to achieve sterility,
(vii) Filling the chilled food-product under hygienic conditions,
(viii) Optionally filling the chilled product aseptically in a packaging.

In an alternative, the method comprises the steps of:
(i) Dispersing soluble dietary fiber, hydrocolloid, emulsifier, water and oil and/or fat to obtain a food-product mix,
(ii) Optionally preheating the obtained food-product mix,
(iii) Thermally sterilizing the food-product by direct or indirect heat exchanger process, applying a pressure range of 2,000 kPa to 25,000 kPa, in order to achieve sterility,
(iv) Filling the chilled food-product under hygienic conditions,
(v) Optionally filling the chilled product aseptically in a packaging.

In the above processes, the mixing equipment in step (i) may be any commonly available mechanical device suitable for mixing food ingredients known by a person of ordinary skill in the art. In a preferred embodiment in combination with any one of the above or below embodiments, the mixing device in step (i) is a high shear mixer.

In a further preferred embodiment in combination with any one of the above or below embodiments, the thermally sterilizing of the food product in steps (vi) and (iii), respectively, is carried out at high temperature for a short period in a continuous-flow equipment designed for rapid heat transfer including a homogenization step.

Thus, an appropriate thermal treatment to eliminate potential spoilage microorganisms for ensuring the product safety and microbiological stability over time during the shelf-life without having a detrimental impact on the organoleptic quality and desired foam performance is required. In this respect a high temperature process with a short holding time in order to provide the commercial sterility of the product shall be adopted.

The temperature and the time may be adjusted according to the given product characteristics based on pH, water activity and specific product formulation within the specific temperature time combination given in the table below.

**Table 1: Process parameter for UHT and Pasteurization treatment**

| | Pasteurization | UHT sterilization |
|---|---|---|
| Temperature | 80°C - 105°C | 120 - 150 °C |
| Time | 30 sec-15 min | 2 sec- 240 sec |

In a preferred embodiment of the above method in combination with any of the above or below embodiments, in order to obtain the required microbiological sterility, the resulting mixture is heated up to a temperature in the range of 80°C to 105°C, more preferably in the range of 85°C to 98°C for high acid composition or foam and in the range of 120°C to 150°C, more preferably in the range of 125°C to 140°C for low acid composition or foam.

For storage of the composition or the foam, the mixture is preferably cooled to a temperature equal to or lower than the maximal aseptic filling temperature. Preferably, an aseptic filling temperature is below 40°C, more preferably below 15°C.

According to the present invention, the term "under hygenic conditions" is used representatively for conditions, which ensure microbiological shelf life by minimizing the possibility of recontamination.

In a preferred embodiment in combination with any one of the above or below embodiments, the chilled product is aseptically filled in a packaging (steps (viii) and (v)). More preferably, the packaging has barrier properties, in particular with regard to light and oxygen. A packaging having said barrier properties can ensure a long shelf-life stability.

The present invention also provides a container, comprising the composition, foam or food-product additive of the present invention.

In a preferred embodiment in combination with any of the above or below embodiments, the container is a pressurized container comprising a pressurized gas at a pressure of from 10 to 30 x 10⁵ Pa.

In a further preferred embodiment in combination with any of the above or below embodiments, the pressurized gas is selected among air, nitrogen, carbon dioxide, nitrous oxide, helium, oxygen and mixtures thereof. Such a pressurized container may comprise a valve allowing to introduce the pressurized gas and an opening for dispensing the foamed composition.

The present invention provides a fiber-containing food product, which can form a stable foam. Foams created with the compositions in accordance with the present invention are surprisingly stable.

### Examples

The following examples further describe the invention. All examples have been prepared according to the same procedure described below.

In the Examples and Comparative Examples the plant protein extract is dispersed in the amounts shown in the below table in approximately 50°C warm water using a high shear mixer and is kept warm under continuous stirring for at least 15 minutes.

Xanthan, carrageenan, low MW soluble fiber (Fibersol^{®}-2, soluble dietary fiber) and high MW insoluble fiber are pre-blended with sugar and dispersed in warm water in the amounts shown in the below table at a temperature of approximately 50°C. Separately, lecithin is dispersed in sunflower oil at a temperature of approximately 60°C.

Subsequently all parts are mixed together, homogenized at a pressure of 6,000 kPa and indirectly heated up to 94°C. The composition is then hold at 94°C for 10 minutes and cooled down to about 40°C before being filled and closed in bottles.

The experiment to evaluate the "foaming hot" behavior is performed by filling 112 g composition in a recipient including a foaming device as well as controlled heating feature, so that at the end of the foaming and heating step the composition is at about 65°C.

The foaming cold experiments are done according to the same procedure as for the foaming hot experiments, but without switching on the controlled heating.

After the foaming step, cold or hot, the 112 g content is transferred in a cylinder to evaluate the foaming performances.

The results of the foaming are shown in the table below.

| | **Comp. Ex. 1** | **Comp. Ex. 2** | **Comp. Ex. 3** | **Comp. Ex. 4** | **Comp. Ex. 5** | **Ex. 6** | **Ex. 7** |
|---|---|---|---|---|---|---|---|
| | | | | | | | |
| **water (wt%)** | 30 | 30 | 30 | 30 | 30 | 30 | 30 |
| **plant protein extract (wt%)** | 3.0 | 3.0 | 1.8 | 1.5 | 3.0 | 1.5 | 3.5 |
| **water (wt%)** | 30 | 30 | 30 | 30 | 30 | 30 | 30 |
| **sugar (wt%)** | 2 | 2 | 2 | 2 | 2 | 2 | 2 |
| **xanthan (wt%)** | 0 | 0.2 | 0.5 | 0.05 | 0 | 0.12 | 0.25 |
| **carrageenan (wt%)** | | | | | 0.4 | | 0 |
| **low MW soluble fiber (soluble dietary fiber) (wt%)** | 2 | 0 | 0.5 | 2.0 | 0 | 2.0 | 1.2 |
| **high MW insoluble fiber (wt%)** | 0 | 2 | 0 | 0 | 2 | 0 | 2 |
| **water (wt%)** | 29.7 | 27.45 | 34.6 | 30.6 | 29.35 | 30.48 | 28.8 |
| **sunflower oil (wt%)** | 3 | 5 | 0.5 | 3.5 | 3 | 3.6 | 2.0 |
| **lecithin (wt%)** | 0.3 | 0.35 | 0.1 | 0.35 | 0.25 | 0.3 | 0.25 |
| **total** | 100 | 100 | 100 | 100 | 100 | 100 | 100 |
| | | | | | | | |
| **Foaming hot** | vp | g | p | vp | g | g | vg |
| **Foaming cold** | p | vg | g | p | g | vg | vg |
| **Foam stability** | p | p | p | p | p | vg | vg |

| | | | | | | | |
|---|---|---|---|---|---|---|---|
| Comp. Ex. = Comparative Example; Ex. = Example; vp=very poor, p=poor, g=good, vg=very good | | | | | | | |

The foaming performances are evaluate based on the volume of foam created and measuring the stability of the foam over 15 minutes resting time at ambient temperature. In addition to foam height reduction, the drained volume and the bubble size are also taken into consideration

As can be seen from the Examples and Comparative Examples, the compositions in accordance with the present invention show good to very good hot foaming, very good cold foaming and very good foam stability.

## Claims

1. Composition or foam comprising soluble dietary fiber, hydrocolloid, emulsifier and oil and/or fat, wherein
vi. the soluble fiber has a weight average molecular weight between 500 and 3,000 Daltons,
vii. the content of soluble fiber is between 0.1 and 2.5% by weight, based on the total weight of the composition or foam,
viii. the weight ratio between soluble fiber and hydrocolloid is from 1 : 1 to 20 : 1,
ix. the emulsifier content is between 0.05 to 0.8% by weight, based on total weight of the composition or foam, and
x. the oil and/or fat content is higher than 0.85 % by weight, based on total weight of the composition or foam.

2. The composition or foam according to claim 1, wherein the hydrocolloid is xanthan, alginic acid, salts of alginic acid, propylene glycol alginate, carrageenan, or high methoxyl pectin, or any combination thereof.

3. The composition or foam according to any one of the preceding claims, wherein the emulsifier is lecithin.

4. The composition or foam according to any one of the preceding claims, wherein the composition or foam comprises between 0.1 and 15% by weight protein, based on the total weight of the composition or foam.

5. The composition or foam according to any one of the preceding claims, wherein the composition or foam comprises between 0.9 and 9% by weight of oil and/or fat, based on the total weight of the composition or foam.

6. Food-product additive comprising the composition or foam according to any one of the preceding claims.

7. The food-product additive according to claim 6, wherein the food product is a beverage.

8. The food-product additive according to claim 7, wherein the beverage is milk, coffee, chocolate, tea, a sparkling alcoholic beverage, a non-alcoholic beverage, water, club soda, seltzer, mineral water, milk, or plant-based juice/broth, vegan milk from soy, oat, rice, flax, pea, coconut, almond, cashew, hazelnut, macadamia, or peanut, or any combination thereof.

9. Foam obtainable or obtained from the composition or food-product additive according to any one of claims 1 to 8.

10. Method for producing a composition, foam or food-product additive according to any one of claims 1 to 8 comprising the steps of weighing the ingredients in moisture resistant packaging, or blending the ingredients before packing.

11. Method for producing or enhancing foam in a food product comprising the steps of adding the composition, foam or food-product additive of any one of claims 1 to 8 to the food product and pouring the food-product in a receptacle having a mechanical rotating or vibrating device, preferably a mixer, whipper or agitator actuated by a motor or magnetic impulsion.

12. Food product comprising the composition, foam or food-product additive of any one of claims 1 to 8.

13. Method for the production of the food product of claim 12 comprising the steps of:
(i) Dispersing soluble dietary fiber and hydrocolloid in water or in the water-based bulk of the food-product by means of an effective mixing device,
(ii) Optionally preheating the resulting dispersion of step (i) to solubilize and hydrate the dried powders,
(iii) Dispersing emulsifier in the oil and/or fat of the food-product,
(iv) Mixing the dispersions of steps (ii) and (iii) to obtain a food-product mix,
(v) Optionally preheating the obtained food-product mix of step (iv),
(vi) Thermally sterilizing the food-product by direct or indirect heat exchanger process, applying a pressure range of 2,000 kPa to 25,000 kPa, in order to achieve sterility,
(vii) Filling the chilled food-product under hygienic conditions,
(viii) Optionally filling the chilled product aseptically in a packaging.

14. Method for the production of the food product of claim 12 comprising the steps of:
(i) Dispersing soluble dietary fiber, hydrocolloid, emulsifier, water and oil and/or fat to obtain a food-product mix,
(ii) Optionally preheating the obtained food-product mix,
(iii) Thermally sterilizing the food-product by direct or indirect heat exchanger process, applying a pressure range of 2,000 kPa to 25,000 kPa, in order to achieve sterility,
(iv) Filling the chilled food-product under hygienic conditions,
(v) Optionally filling the chilled product aseptically in a packaging.

15. Use of the composition, foam or food-product additive according to any one of claims 1 to 8 for addition to a food product.

16. Container comprising the composition, foam or food-product additive according to any one of claims 1 to 8.
